# EUROPÄISCHE PATENTSCHRIFT

(11) **EP 3 524 731 B1**
(45) Veröffentlichungstag und Bekanntmachung des Hinweises auf die Patenterteilung: **20.01.2021**
(21) Anmeldenummer: 19157002.7
(22) Anmeldetag: 13.02.2019
(51) Int. Cl.: E01C 19/00, E01C 19/48, E01C 23/088, G05D 1/02, E02F 9/20

(54) **STRASSENBAUMASCHINE UND VERFAHREN ZUR AUSRICHTUNG EINER STRASSENBAUMASCHINE**
ROAD CONSTRUCTION MACHINE AND METHOD FOR ALIGNING SAME
ENGIN DE CONSTRUCTIONS ROUTIÈRES ET PROCÉDÉ D'ALIGNEMENT D'UN ENGIN DE CONSTRUCTIONS ROUTIÈRES

(30) Priorität: 13.02.2018 DE 102018001133
(43) Veröffentlichungstag der Anmeldung: 14.08.2019
(73) Patentinhaber: Dynapac GmbH, 26203 Wardenburg (DE)
(72) Erfinder: LÜRDING, Eberhard, 26209 Hatten (DE)
(74) Vertreter: Möller, Friedrich

(56) Entgegenhaltungen:
- EP-A1- 3 276 079
- DE-A1-102014 010 837
- DE-A1-102016 009 516
- DE-T2- 69 411 064

## Beschreibung

Die Erfindung betrifft ein Verfahren zur Ausrichtung einer Straßenbaumaschine oder einer Komponente davon gemäß dem Oberbegriff des Anspruchs 1 und eine Straßenbaumaschine gemäß Anspruch 11.

Für die Herstellung sowie das Abtragen von Straßenbelägen dienen Straßenbaumaschinen, wie beispielsweise Straßenfertiger und Straßenfräsen. Während Straßenfertiger dazu eingesetzt werden Straßenbeläge aus vorzugsweise Asphalt (Schwarzdecken), aber auch Beton herzustellen, dienen Straßenfräsen dazu, diese Straßenbeläge schichtweise abzutragen bzw. abzufräsen. Solche üblicherweise selbstfahrenden Straßenbaumaschinen verfügen über verschiedene Komponenten zum Einbau bzw. Abtragen der Straßenbeläge.

Straßenfertiger verfügen in Fahrtrichtung bzw. Einbaurichtung gesehen hinter einem Fahrwerk über eine Einbaubohle. Die Einbaubohle kann sowohl breitenunveränderlich, aber auch als sogenannte Vario-Bohle mit veränderlicher Arbeitsbreite ausgebildet sein. Um Straßenbeläge unterschiedlicher Breite herstellen zu können, weisen Einbaubohlen bekannter Straßenfertiger zusätzlich zu einem Einbaubohlenhauptteil oder einem Einbaubohlenmittelteil an den äußeren Enden des Einbaubohlenmittelteils Einbaubohlenverstellteile oder Verschiebeteile auf. Diese Einbaubohlenverstellteile sind 2019015514.DOC dem Einbaubohlenmittelteil verfahrbar zugeordnet. Dadurch lässt sich die Breite der Einbaubohle an beiden Seiten gleichermaßen oder nur auf einer Seite verändern bzw. vergrößern.

Straßenbeläge bzw. Asphaltschichten einer zu erstellenden Fahrbahn werden häufig in mehreren nebeneinanderliegenden Bahnen gefertigt, um die notwendige Fahrbahnbreite zu erreichen. Dazu fertigt der Straßenfertiger nacheinander die mehreren nebeneinanderliegenden Bahnen an und orientiert sich dabei an bisher fertiggestellten Bahnen. Alternativ fahren mehrere Straßenfertiger zur gleichzeitigen Herstellung einer mehrbahnigen Fahrbahn leicht versetzt nebeneinander. Für die nebeneinanderliegenden Fahrbahnen ist es ganz wesentlich, dass zwischen zwei angrenzenden Fahrbahnen kein Spalt und keine Überlappung entstehen, sodass sich Rillen oder Kanten bilden könnten. Um dies zu verhindern, ist es bekannt, dass dem Straßenfertiger ein Kantenfolger zugeordnet ist, siehe z.B die Dokumente EP3276079A1,
DE69411064T2, DE102014010837A1 und DE102016009516A1.
Dieser Kantenfolger weist in der Regel mindestens einen Sensor auf, der

die Kante erfasst. Dadurch lässt sich die Position der Kante bzw. der Abstand der Kante zu dem Straßenfertiger bzw. zu der Einbaubohle bestimmen. In Abhängigkeit von der erfassten Kante bzw. dem Abstand wird die Einbaubohle oder das Einbaubohlenverstellteil derart verfahren, dass eine äußere Kante der Bohle, bzw. ein Leitblech, an die Kante heranreicht, sodass keine Rille entsteht. Dazu muss der Kantenfolger bzw. der Sensor in Fahrtrichtung betrachtet vor der Einbaubohle oder auch an der Einbaubohle angeordnet sein, damit noch eine Kante erkennbar ist. Der Kantenfolger ist für die Ausrichtung der Einbaubohle an der Kante über entsprechende Aktoren bzw. Ventile zur Ausrichtung mit der Einbaubohle verbunden.

Als problematisch erweist es sich, dass die Positionsbestimmung der Kante vor dem eigentlichen Einbau des Straßenmaterials bzw. vor der Einbaubohle vollzogen wird. Somit erfolgt die Korrektur bzw. die Ausrichtung der Einbaubohle räumlich versetzt zu der eigentlichen Erfassung der Kante und des Abstandes zu selbiger. Je nachdem mit welcher Fahrgeschwindigkeit der Straßenfertiger betrieben wird, kann ein unterschiedliches Einbauergebnis erzielt werden. Durch die räumliche Trennung der Kantenerfassung und der Ausrichtung der Einbaubohle kann es sowohl zu Rillen zwischen zwei nebeneinanderliegenden Bahnen oder Überlappungen kommen, was beides für die Qualität des Straßenbelags unvorteilhaft ist.

Auf eine ähnliche Art und Weise wie zuvor für einen Straßenfertiger beschrieben, wird auch eine Straßenfräse mit ihrer Frästrommel entlang einer Kante geführt, um einen Straßenbelag bahnweise abzufräsen. Auch der Straßenfräse kann ein Kantenfolger zugeordnet sein, welcher über einen Sensor eine Kante ermittelt und in Abhängigkeit der Position der Kante die Straßenfräse lenkt bzw. die Frästrommel ausrichtet oder nachführt. Auch bei einer Straßenfräse stellt sich das Problem, dass die Erfassung der Kante als Referenzsignal sowie der Abtrag des Untergrundes räumlich getrennt sind und somit je nach Geschwindigkeit zu unterschiedlichen Fräsergebnissen führen können.

Davon ausgehend liegt der Erfindung die Aufgabe zugrunde, ein Verfahren sowie eine Straßenbaumaschine zu schaffen, mit dem die Ausrichtung der Straßenbaumaschine auf eine genaue und zuverlässige Art und Weise erfolgen kann.

Ein Verfahren zur Ausrichtung einer Straßenbaumaschine zur Lösung der genannten Aufgabe weist die Maßnahmen des Anspruchs 1 auf. Demnach ist es vorgesehen, dass für das Ausrichten der Straßenbaumaschine oder der Komponente an der Kante eine Fahrgeschwindigkeit der Straßenbaumaschine erfasst und an die Steuereinrichtung übermittelt wird. Die Fahrgeschwindigkeit der Straßenbaumaschine wird dabei auf bekannte Art und Weise ermittelt und über ein entsprechendes elektrisches Signal der Steuereinrichtung zugeführt. Bei der Steuereinrichtung kann es sich um einen On-Board-Computer oder einen sonstigen Bordrechner für die Steuerung weiterer Komponenten handeln. Durch die Erfassung der Fahrgeschwindigkeit und die Übermittlung selbiger an die Steuereinrichtung kann die Ausrichtung der Straßenbaumaschine bzw. einer Komponente an der Kante auf eine vorgegebene Art und Weise erfolgen. Demnach kann es vorgesehen sein, dass für verschiedene Fahrgeschwindigkeiten die Ausrichtung an der Kante verschiedenartig bzw. mit verschiedenen Geschwindigkeiten erfolgt. Gleichermaßen erfolgt eine Ausrichtung der Straßenbaumaschine oder der Komponente bei gleichen Fahrgeschwindigkeiten auf eine gleiche Art und Weise, sodass stets, unabhängig von der Fahrgeschwindigkeit, das gleiche Einbauergebnis erzielt werden kann. Gleiches gilt für das Abfräsen eines Straßenbelags.

Erfindungsgemäß ist es vorgesehen, dass durch die Steuereinrichtung die Ausrichtung der Straßenbaumaschine oder der Komponente an der erfassten Kante nach dem Erfassen der aktuellen Kantenposition in Abhängigkeit von der Fahrgeschwindigkeit zeitlich verzögert wird, wobei vorzugsweise für eine höhere Fahrgeschwindigkeit die Verzögerung geringer ausfällt, als für eine relativ gesehen geringere Fahrgeschwindigkeit. Durch diese zeitliche Verzögerung der Ausrichtung kann der räumliche Versatz der Kantenerfassung und des Einbaus des Straßenbaumaterials bzw. des Abfräsens kompensiert werden. D. h., dass die Kante durch den Kantenfolger bzw. den Sensor erfasst wird und die Straßenbaumaschine bzw. die Komponente an dieser Kante erst ausgerichtet wird, wenn sie sich auch wirklich an der Position der zuvor erfassten Kante befindet.

Die zeitliche Verzögerung der Ausrichtung richtet sich zum einen nach der Geschwindigkeit der Straßenbaumaschine und zum anderen nach der Anbauposition des mindestens einen Sensors an der Straßenbaumaschine bzw. an der Einbaubohle bzw. an dem Verschiebeteile der Einbaubohle. Die Steuereinrichtung berechnet anhand der ermittelten Fahrgeschwindigkeit sowie anhand der Kantenposition und der Position des mindestens einen Sensors an der Straßenbaumaschine bzw. an der Einbaubohle die zeitliche Verzögerung, mit der die Baumaschine bzw. Komponente ausgerichtet werden soll. Auch wenn während eines endlichen Zeitintervalls die Fahrgeschwindigkeit der Straßenbaumaschine variiert, berechnet die Steuereinrichtung die sich daraus ergebende entsprechende Verzögerung. Durch diese Verzögerung erfolgt stets, und zwar unabhängig von der Fahrgeschwindigkeit, eine exakte Anpassung zwischen zwei benachbarten Fahrbahnen bzw. zwischen einer bestehenden und einer abzufräsenden Fahrbahn. Das dadurch erzielte Ergebnis erfüllt höchste Qualitätsstandards.

Insbesondere kann es die vorliegende Erfindung weiter vorsehen, dass die Einbaubohle des Straßenfertigers in Abhängigkeit von der Fahrgeschwindigkeit des Straßenfertigers an der erfassten Kante ausgerichtet wird, wobei Aktuatoren zur Ausrichtung der Einbaubohle durch die Steuereinrichtung, insbesondere automatisch, angesteuert werden. Dabei versucht der Sensor des Kantenfolgers stets die gleiche relative Position zur Kante zu halten. Durch die direkte Ansteuerung der Aktoren bzw. Aktuatoren, Zylinder und dergleichen der Einbaubohle bzw. des Verschiebeteils, kann die Ausrichtung ohne weitere zeitliche Verzögerung erfolgen. Der räumliche Versatz zwischen Kantenerfassung und Einbau bzw. Abfräsen kann dadurch durch eine zeitliche Verzögerung exakt kompensiert werden.

Eine weitere vorteilhafte Ausgestaltung der vorliegenden Erfindung kann es vorsehen, dass eine Einbaubreite der, insbesondere veränderbaren, Einbaubohle des Straßenfertigers in Abhängigkeit von der Fahrgeschwindigkeit des Straßenfertigers angepasst wird, um an der Kante ausgerichtet zu werden, wobei Aktuatoren der Einbaubohle bzw. des Verschiebeteils zur Anpassung der Einbaubreite durch die Steuereinrichtung, insbesondere automatisch, angesteuert werden. Durch die Anpassung der Einbaubreite durch Verfahren der Einbaubohlenverstellteile können lokale Unregelmäßigkeiten in der Kante kompensiert werden, und zwar ohne, dass die Einbaubreite dabei in einem zu großen Maße verändert werden muss.

Weiter kann es die vorliegende Erfindung besonders vorteilhaft vorsehen, dass die Straßenfräse in Abhängigkeit von der Fahrgeschwindigkeit der Straßenfräse an der erfassten Kante ausgerichtet wird, wobei eine Lenkeinheit zum Lenken bzw. Ausrichten der Straßenfräse durch die Steuereinrichtung für die Ausrichtung entsprechend angesteuert wird. Durch die Steuereinheit wird somit in Verbindung mit der Geschwindigkeitsinformation und der erfassten Kante eine Lenkautomatik für die Straßenfräse geschaffen, und zwar derart, dass die Fräse wenigstens nahezu autonom betreibbar ist.

Darüber hinaus kann ein weiterer Vorteil der Erfindung darin bestehen, dass die Kante taktweise, periodisch oder kontinuierlich durch den mindestens einen Sensor erfasst wird und die Fahrgeschwindigkeit der Straßenbaumaschine taktweise, periodisch oder kontinuierlich ermittelt wird, um die Straßenbaumaschine oder die Komponente der Straßenbaumaschine taktweise, periodisch oder kontinuierlich an der Kante auszurichten. Durch dieses taktweise, periodische oder kontinuierliche Erfassen bzw. Ermitteln und Ausrichten kann das Ausrichten besonders effizient gestaltet werden. Für besonders gradlinige Fahrbahnabschnitte mit wenig Unregelmäßigkeiten und Kurven ist es ausreichend, wenn die Kante nur taktweise ermittelt wird. Bei besonders unregelmäßigen Kanten bzw. kurvigem Straßenverlauf erscheint eine kontinuierliche Erfassung der Kante sowie eine kontinuierliche Ausrichtung als zweckmäßiger.

Schließlich kann es weiter vorgesehen sein, dass in Abhängigkeit der erfassten Kante sowie der Fahrgeschwindigkeit eine zu fördernde Menge eines Straßenbaumaterials von einem Vorratsbehälter des Straßenfertigers entgegen der Fahrtrichtung vor einer Verteilerschnecke und die Einbaubohle gefördert wird, wobei ein Förderband zum Fördern des Straßenbaumaterials und die Verteilerschnecke durch die Steuereinrichtung angesteuert werden. Insbesondere bei Kreuzungen, Einfahrten oder Ausfahrten wird eine größere Menge an Straßenbaumaterial für die Herstellung eines Straßenbelags mit konstanter Dicke benötigt. Da auch hier eine Variation der Fahrgeschwindigkeit zu einer sich ändernden Förderrate führen muss, gestaltet sich eine Anpassung der Fördermenge in Abhängigkeit der erfassten Kante und der Fahrgeschwindigkeit als vorteilhaft. Durch die Erfassung der Kante sowie der Fahrgeschwindigkeit kann sichergestellt werden, dass der Straßenbelag auch bei sich ändernden Einbaubreiten stets die gleiche Dicke aufweist.

Ein bevorzugtes Ausführungsbeispiel wird nachfolgend anhand der Zeichnung näher erläutert. In dieser zeigt:
- Fig. 1: eine schematische Seitenansicht eines Straßenfertigers mit einer Einbaubohle, und
- Fig. 2: eine symbolische Sicht auf einen Straßenfertiger mit einer Kante.

Auch wenn im Folgenden als Ausführungsbeispiel für eine Straßenbaumaschine ausschließlich ein Straßenfertiger 10 dargestellt und beschrieben wird, bezieht sich die hier beanspruchte Erfindung ausdrücklich auch auf eine Straßenfräse.

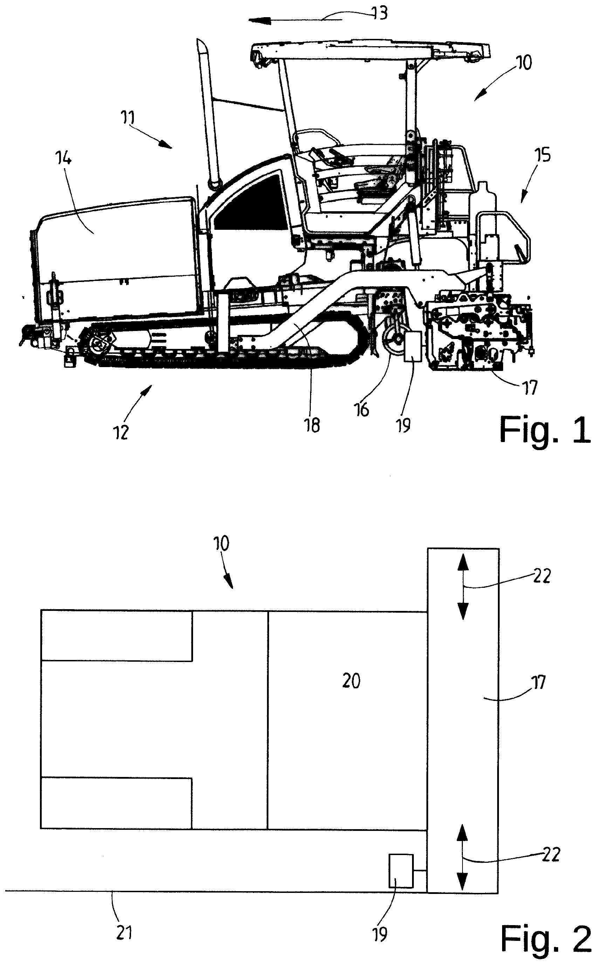

Der in der Fig. 1 dargestellte Straßenfertiger 10 dient zur Herstellung von Straßenbelägen. Bevorzugt dient der Straßenfertiger 10 zur Herstellung von sogenannten Schwarzdecken, nämlich Straßenbelägen aus Asphalt. Der Straßenfertiger 10 kann aber auch zur Herstellung von Straßenbelägen aus anderen Materialien, z. B. Beton, eingesetzt werden.

Der Straßenfertiger 10 ist selbstfahrend ausgebildet. Dazu verfügt der Straßenfertiger 10 über eine zentrale Antriebseinheit 11, die beispielsweise einen Verbrennungsmotor aufweist, der Hydraulikpumpen zur Versorgung von Hydraulikmotoren und ggf. einen Generator zur Erzeugung von elektrischer Energie für elektrische Antriebe oder Heizungen aufweist.

Der Straßenfertiger 10 verfügt im Übrigen über ein Fahrwerk 12, das im gezeigten Ausführungsbeispiel der Fig. 1 als Raupenfahrwerk ausgebildet ist. Der Straßenfertiger 10 kann aber auch mit einem Radfahrwerk versehen sein. Das Fahrwerk 12 wird von der Antriebseinheit 11 derart angetrieben, dass sich der Straßenfertiger 10 zur Herstellung des Straßenbelags in Fahrtrichtung 13 fortbewegt.

In Fahrtrichtung 13 gesehen, ist vor dem Fahrwerk 12 ein wannen- bzw. muldenartig ausgebildeter Vorratsbehälter 14 angeordnet. Der Vorratsbehälter 14 nimmt einen Vorrat des zur Herstellung des Straßenbelags dienenden Materials auf. Durch ein beispielsweise als Kratzerförderer ausgebildetes Förderorgan wird das noch heiße Straßenbaumaterial vom Vorratsbehälter 14 entgegen der Fahrtrichtung 13 zum hinteren Ende 15 des Straßenfertigers transportiert. Das hintere Ende 15 des Straßenfertigers 10 befindet sich in Fahrtrichtung 13 gesehen hinter dem Fahrwerk 12 und der Antriebseinheit 11.

Dem hinteren Ende 15 des Straßenfertigers 10 sind eine Verteilerschnecke 16 und mit Abstand dahinter eine Einbaubohle 17 zugeordnet. Die Verteilerschnecke 16 und die Einbaubohle 17 sind auf- und abbewegbar. Zu diesem Zweck sind die Einbaubohle 17 und die Verteilerschnecke 16 an Tragarmen 18 angehängt. Die Tragarme 18 sind schwenkbar am Fahrwerk 12 des Straßenfertigers 10 gelagert. Hydraulikzylinder oder dergleichen verschwenken die Tragarme 18, um die Einbaubohle 17, vorzugsweise auch die Verteilerschnecke 16, anzuheben bzw. abzusenken. Zur Veränderung der Einbaubreite kann die Einbaubohle an ihren Enden jeweils mindestens ein Einbaubohlenverstellteil oder ein Verschiebeteil aufweisen. Durch Verfahren dieser nicht dargestellten Teile quer zur Fahrtrichtung 13 (s. Pfeil 22 in Fig. 2) kann die Einbaubreite verändert werden sowie die relative Position der Einbaubohle 17 bzw. des Einbaubohlenverstellteils oder des Verschiebeteils zur Kante eingestellt werden.

Bei dem hier dargestellten Straßenfertiger 10 ist stark schematisiert ein Kantenfolger 19 dargestellt. Der in der Fig. 1 dargestellte Kantenfolger 19 ist lediglich als Symbol zu verstehen und weicht von seiner eigentlichen Gestalt ab. Wichtig ist hier nur, dass der Kantenfolger 19 mit einem nicht dargestellten Sensor in Fahrtrichtung 13 betrachtet vor der Einbaubohle 17 angeordnet ist. Es kann außerdem vorgesehen sein, dass der Kantenfolger 19 direkt mit der Einbaubohle 17 bzw. dem Einbaubohlenverstellteil oder dem Verschiebeteil verbunden ist, insbesondere an einem in Fahrtrichtung 13 betrachtet vorderen Ende der Einbaubohle 17, sodass der Sensor des Kantenfolgers 19 stets eine Kante erfassen kann.

Bei dem Sensor des Kantenfolgers 19 kann es sich um eine Kamera, einen konventionellen Abstandshalter, oder auch um einen mechanischen Taster handeln. Über eine entsprechende Steuerung bzw. Datenverarbeitung kann über diesen Sensor die Kante erfasst bzw. der Abstand von dem Kantenfolger 19 zu der Kante bzw. die relative Positionierung der Kante zu dem Kantenfolger 19 bestimmt werden. Diese Informationen über die Kante werden erfindungsgemäß an eine interne Steuereinrichtung weitergeleitet. Bei dieser Steuereinrichtung kann es sich um einen Bordrechner oder einen sonstigen Computer handeln, der dem Straßenfertiger 10 zugeordnet ist. Die Übertragung der Kantendaten kann kabellos oder kabelgebunden erfolgen. Gleichermaßen wird die Fahrgeschwindigkeit des Straßenfertigers erfasst und an die gleiche Steuereinrichtung übertragen. Die Ermittlung der Fahrgeschwindigkeit erfolgt auf eine übliche und bekannte Weise.

Damit gemäß der stark symbolisierten Darstellung des Straßenfertigers 10 der Fig. 2 die Einbaubohle 17 bzw. das Einbaubohlenverstellteil oder das Verschiebeteil entlang der Kante 21 geführt werden kann, wird von der Steuereinrichtung 20 ein entsprechendes Steuersignal erzeugt, welches der Ausrichtung der Einbaubohle 17 an der Kante 21 entspricht. Dabei ist die Steuereinrichtung 20 direkt mit den entsprechenden Aktoren der Einbaubohle 17 verbunden, sodass eine Ausrichtung ohne Zeitverzögerung erfolgen kann. Die Generierung der Steuersignale für die Ausrichtung der Einbaubohle 17 bzw. des Sensors erfolgt auf Basis der Informationen über die Position bzw. den Abstand der Kante 21 zu dem Straßenfertiger 10 und der Fahrgeschwindigkeit des Straßenfertigers 10. Durch die Kenntnis der Anbauposition des Kantenfolgers 19 an dem Straßenfertiger 10 bzw. an der Einbaubohle 17 und die Fahrgeschwindigkeit kann die Steuereinrichtung 20 ermitteln, wann die erfasste Position der Kante 21 von der nachfolgenden Einbaubohle 17 erreicht wird. Sobald die Einbaubohle 17 die zuvor erfasste Position der Kante 21 erreicht hat, wird die Einbaubohle 17 entsprechend an der Kante 21 ausgerichtet. Je nach Beschaffenheit der Kante 21 und des Straßenverlaufs, kann diese Ausrichtung periodisch oder kontinuierlich erfolgen.

Neben der Berücksichtigung der Fahrgeschwindigkeit für die Ausrichtung der Einbaubohle 17 können auch weitere Betriebsparameter der Straßenbaumaschine herangezogen werden, wie beispielsweise eine Einstellung der Lenkung oder eine Neigung der Straßenbaumaschine aufgrund eines ebenfalls geneigten Untergrundes.

Darüber hinaus ist es erfindungsgemäß auch vorgesehen, dass andere Prozesse des Herstellungsverfahrens bzw. des Fräsverfahrens, wie beispielsweise der Materialtransport, an die Fahrgeschwindigkeit der Straßenbaumaschine angepasst werden. Ein Ausführungsbeispiel kann es beispielsweise vorsehen, dass auf Basis einer erfassten Kante bzw. Referenz und der Fahrgeschwindigkeit eine Materialförderrate von dem Vorratsbehälter 14 zu der Verteilerschnecke 16 bzw. Einbaubohle 17 bestimmt wird. Wird beispielsweise durch den Kantenfolger 19 eine starke Veränderung des Abstandes der Straßenbaumaschine zu der Kante erkannt, welche auf eine Einfahrt oder eine Kreuzung schließen lässt, vergrößert sich der Bedarf an Straßenbaumaterial. In derartigen Fällen kann die Fördergeschwindigkeit des Straßenbaumaterials von dem Vorratsbehälter 14 zu der Verteilerschnecke 16 bzw. zu der Einbaubohle 17 beschleunigt werden. Gleichermaßen ist die Förderrate bei einer Verringerung der Einbaubreite zu verringern.

### Bezugszeichenliste:

- 10: Straßenfertiger
- 11: Antriebseinheit
- 12: Fahrwerk
- 13: Fahrtrichtung
- 14: Vorratsbehälter
- 15: hinteres Ende
- 16: Verteilerschnecke
- 17: Einbaubohle
- 18: Tragarm
- 19: Kantenfolger
- 20: Steuereinrichtung
- 21: Kante
- 22: Pfeil

## Patentansprüche

1. Verfahren zur Ausrichtung einer Straßenbaumaschine, nämlich eines Straßenfertigers (10) oder einer Straßenfräse, oder einer Komponente davon, nämlich einer Einbaubohle (17) oder einer Frästrommel, an einer Kante (21) eines Straßenbelags mittels eines Kantenfolgers (19), der an der Straßenbaumaschine angeordnet ist, wobei die Kante (21) während des Betriebs der Straßenbaumaschine durch mindestens einen Sensor des Kantenfolgers (19) erfasst wird und die Straßenbaumaschine oder die Komponente durch eine Steuereinrichtung (20) relativ zu der erfassten Kante (21) ausgerichtet wird, wobei für das Ausrichten der Straßenbaumaschine oder der Komponente an der Kante (21) eine Fahrgeschwindigkeit der Straßenbaumaschine erfasst und an die Steuereinrichtung (20) übermittelt wird, **dadurch gekennzeichnet, dass** durch die Steuereinrichtung (20) die Ausrichtung der Straßenbaumaschine oder der Komponente an der erfassten Kante (21) nach dem Erfassen der aktuellen Kantenposition in Abhängigkeit von der Fahrgeschwindigkeit zeitlich verzögert wird.

2. Verfahren nach Anspruch 1, **dadurch gekennzeichnet, dass** die Kante (21) des Straßenbelags in Fahrtrichtung (13) betrachtet vor der Komponente, nämlich der Einbaubohle (17) oder der Frästrommel, durch den mindestens einen Sensor erfasst wird.

3. Verfahren nach Anspruch 1, **dadurch gekennzeichnet, dass** die Kante (21) einer bereits fertiggestellten Bahn des Straßenbelags in Fahrtrichtung (13) betrachtet vor der Komponente, nämlich der Einbaubohle (17) oder der Frästrommel, durch den mindestens einen Sensor erfasst wird.

4. Verfahren nach einem der vorherigen Ansprüche, **dadurch gekennzeichnet, dass** für eine höhere Fahrgeschwindigkeit die Verzögerung geringer ist, als für eine relativ gesehen geringere Fahrgeschwindigkeit.

5. Verfahren nach Anspruch 1 oder 4, **dadurch gekennzeichnet, dass** für die Ermittlung der zeitlichen Verzögerung der Ausrichtung durch die Steuereinrichtung (20) auch die Position des mindestens einen Sensors an der Straßenbaumaschine in Betracht gezogen wird.

6. Verfahren nach einem der vorherigen Ansprüche, **dadurch gekennzeichnet, dass** die Einbaubohle (17) oder ein Verschiebeteil der Einbaubohle (17) des Straßenfertigers (10) in Abhängigkeit von der Fahrgeschwindigkeit des Straßenfertigers (10) an der erfassten Kante (21) ausgerichtet werden, wobei Aktuatoren zur Ausrichtung der Einbaubohle (17) oder des Verschiebeteils durch die Steuereinrichtung (20) angesteuert werden.

7. Verfahren nach einem der vorherigen Ansprüche, **dadurch gekennzeichnet, dass** eine Einbaubreite der Einbaubohle (17) des Straßenfertigers (10) in Abhängigkeit von der Fahrgeschwindigkeit des Straßenfertigers (10) angepasst wird, um an der Kante (21) ausgerichtet zu werden, wobei Aktuatoren zur Anpassung der Einbaubreite durch die Steuereinrichtung (20) angesteuert werden.

8. Verfahren nach einem der vorherigen Ansprüche, **dadurch gekennzeichnet, dass** die Straßenfräse in Abhängigkeit von der Fahrgeschwindigkeit der Straßenfräse an der erfassten Kante (21) ausgerichtet wird, wobei eine Lenkeinheit zum Lenken bzw. Ausrichten der Straßenfräse durch die Steuereinrichtung (20) für die Ausrichtung entsprechend angesteuert wird.

9. Verfahren nach einem der vorherigen Ansprüche, **dadurch gekennzeichnet, dass** die Kante (21) taktweise, periodisch oder kontinuierlich durch den mindestens einen Sensor erfasst wird und die Fahrgeschwindigkeit der Straßenbaumaschine taktweise, periodisch oder kontinuierlich ermittelt wird, um die Straßenbaumaschine oder die Komponente der Straßenbaumaschine taktweise, periodisch oder kontinuierlich an der Kante (21) auszurichten.

10. Verfahren nach einem der vorherigen Ansprüche, **dadurch gekennzeichnet, dass** in Abhängigkeit der erfassten Kante (21) sowie der Fahrgeschwindigkeit eine zu fördernde Menge eines Straßenbaumaterials von einem Vorratsbehälter (14) des Straßenfertigers (10) entgegen der Fahrtrichtung (13) vor eine Verteilerschnecke (16) und die Einbaubohle (17) gefördert wird, wobei ein Förderband zum Fördern des Straßenbaumaterials und die Verteilerschnecke (16) durch die Steuereinrichtung (20) angesteuert werden.

11. Straßenbaumaschine, nämlich Straßenfertiger (10) oder Straßenfräse, zur Durchführung des Verfahrens gemäß mindestens einem der Ansprüche 1 bis 10.

## Claims

1. Method for orienting a road-building machine, namely a road paver (10) or a road-milling machine, or a component thereof, namely a paving screed (17) or a milling drum, at an edge (21) of a road cover by means of an edge follower (19) which is arranged on the road-building machine, wherein the edge (21) is detected by at least one sensor of the edge follower (19) during operation of the road-building machine, and the road-building machine or the component is oriented relative to the detected edge (21) by a control device (20), wherein, for orienting the road-building machine or the component at the edge (21), a travelling speed of the road-building machine is detected and transmitted to the control device (20), **characterized in that** the orientation of the road-building machine or of the component at the detected edge (21) is time-delayed by the control device (20) after the current edge position has been detected in dependence on the travelling speed.

2. Method according to Claim 1, **characterized in that** the edge (21) of the road cover, as viewed in the direction of travel (13) upstream of the component, namely the paving screed (17) or the milling drum, is detected by the at least one sensor.

3. Method according to Claim 1, **characterized in that** the edge (21) of an already paved lane of the road cover, as viewed in the direction of travel (13) upstream of the component, namely the paving screed (17) or the milling drum, is detected by the at least one sensor.

4. Method according to one of the preceding claims, **characterized in that** the delay is shorter for a higher travelling speed than for a relatively seen lower travelling speed.

5. Method according to Claim 1 or 4, **characterized in that** the position of the at least one sensor on the road-building machine is also taken into consideration by the control device (20) for determining the time delay of the orientation.

6. Method according to one of the preceding claims, **characterized in that** the paving screed (17) or a displaceable part of the paving screed (17) of the road paver (10) is oriented at the detected edge (21) in dependence on the travelling speed of the road paver (10), wherein actuators for orienting the paving screed (17) or the displacement part are activated by the control device (20).

7. Method according to one of the preceding claims, **characterized in that** a paving width of the paving screed (17) of the road paver (10) is adapted in dependence on the travelling speed of the road paver (10) in order to be oriented at the edge (21), wherein actuators for adapting the paving width are activated by the control device (20).

8. Method according to one of the preceding claims, **characterized in that** the road-milling machine is oriented at the detected edge (21) in dependence on the travelling speed of the road-milling machine, wherein a steering unit for steering or orienting the road-milling machine is correspondingly activated by the control device (20) for the orientation.

9. Method according to one of the preceding claims, **characterized in that** the edge (21) is cyclically, periodically or continuously detected by the at least one sensor, and the travelling speed of the road-building machine is determined cyclically, periodically or continuously in order to orient the road-building machine or the component of the road-building machine at the edge (21) cyclically, periodically or continuously.

10. Method according to one of the preceding claims, **characterized in that**, in dependence on the detected edge (21) and the travelling speed, a quantity of a road-building material to be conveyed is conveyed from a supply container (14) of the road paver (10) counter to the direction of travel (13) upstream of a distributing auger (16) and the paving screed (17), wherein a conveyor belt for conveying the road-building material and the distributing auger (16) are activated by the control device (20).

11. Road-building machine, namely a road paver (10) or road-milling machine, for carrying out the method according to at least one of Claims 1 to 10.

## Revendications

1. Procédé d'alignement d'une machine de construction routière, à savoir d'un finisseur routier (10) ou d'une fraiseuse routière, ou d'un composant de ceux-ci, à savoir d'une table de pose (17) ou d'un tambour de fraisage, sur un bord (21) d'un revêtement routier au moyen d'un suiveur de bord (19), qui est agencé sur la machine de construction routière, le bord (21) étant détecté pendant le fonctionnement de la machine de construction routière par au moins un capteur du suiveur de bord (19) et la machine de construction routière ou le composant étant aligné par un appareil de commande (20) par rapport au bord détecté (21),
pour l'alignement de la machine de construction routière ou du composant sur le bord (21), une vitesse de déplacement de la machine de construction routière étant détectée et transmise à l'appareil de commande (20),
**caractérisé en ce que**
l'alignement de la machine de construction routière ou du composant sur le bord détecté (21) est retardé dans le temps par l'appareil de commande (20) après la détection de la position de bord actuelle en fonction de la vitesse de déplacement.

2. Procédé selon la revendication 1, **caractérisé en ce que** le bord (21) du revêtement routier est détecté par ledit au moins un capteur avant le composant, à savoir la table de pose (17) ou le tambour de fraisage, tel que vu dans la direction de déplacement (13).

3. Procédé selon la revendication 1, **caractérisé en ce que** le bord (21) d'une bande déjà achevée du revêtement routier est détecté par ledit au moins un capteur avant le composant, à savoir la table de pose (17) ou le tambour de fraisage, tel que vu dans la direction de déplacement (13).

4. Procédé selon l'une quelconque des revendications précédentes, **caractérisé en ce que** le retardement est plus faible pour une vitesse de déplacement élevée que pour une vitesse de déplacement relativement plus faible.

5. Procédé selon la revendication 1 ou 4, **caractérisé en ce que** la position dudit au moins un capteur sur la machine de construction routière est également prise en compte pour la détermination du retardement temporel de l'alignement par l'appareil de commande (20).

6. Procédé selon l'une quelconque des revendications précédentes, **caractérisé en ce que** la table de pose (17) ou une partie coulissante de la table de pose (17) du finisseur routier (10) est alignée sur le bord détecté (21) en fonction de la vitesse de déplacement du finisseur routier (10), des actionneurs pour l'alignement de la table de pose (17) ou de la partie coulissante étant commandés par l'appareil de commande (20) .

7. Procédé selon l'une quelconque des revendications précédentes, **caractérisé en ce qu'une** largeur de pose de la table de pose (17) du finisseur routier (10) est adaptée en fonction de la vitesse de déplacement du finisseur routier (10), afin d'être alignée sur le bord (21), des actionneurs pour l'adaptation de la largeur de pose étant commandés par l'appareil de commande (20) .

8. Procédé selon l'une quelconque des revendications précédentes, **caractérisé en ce que** la fraiseuse routière est alignée sur le bord détecté (21) en fonction de la vitesse de déplacement de la fraiseuse routière, une unité de direction pour la direction ou l'alignement de la fraiseuse routière étant commandée de manière appropriée pour l'alignement par l'appareil de commande (20).

9. Procédé selon l'une quelconque des revendications précédentes, **caractérisé en ce que** le bord (21) est détecté cycliquement, périodiquement ou continuellement par ledit au moins un capteur, et la vitesse de déplacement de la machine de construction routière est déterminée cycliquement, périodiquement ou continuellement, afin d'aligner cycliquement, périodiquement ou continuellement la machine de construction routière ou le composant de la machine de construction routière sur le bord (21).

10. Procédé selon l'une quelconque des revendications précédentes, **caractérisé en ce qu'en** fonction du bord détecté (21), ainsi que de la vitesse de déplacement, une quantité de matériau de construction routière à transporter depuis un contenant de stockage (14) du finisseur routier (10) à l'encontre de la direction de déplacement (13) est transportée avant une vis de répartition (16) et la table de pose (17), une bande de transport pour le transport du matériau de construction routière et la vis de répartition (16) étant commandées par l'appareil de commande (20).

11. Machine de construction routière, à savoir finisseur routier (10) ou fraiseuse routière, pour la réalisation du procédé selon au moins l'une quelconque des revendications 1 à 10.
